# EUROPÄISCHE PATENTANMELDUNG

(11) **EP 0 833 533 A2**
(43) Veröffentlichungstag der Anmeldung: **01.04.1998**
(21) Anmeldenummer: 97440080.6
(22) Anmeldetag: 22.09.1997
(51) Int. Cl.: H04Q 7/22, H04Q 7/30

(54) **Transkodier-Vorrichtung**

(30) Priorität: 30.09.1996 DE 19640040
(71) Anmelder: ALCATEL ALSTHOM COMPAGNIE GENERALE D'ELECTRICITE, 75008 Paris (FR)
(72) Erfinder: Rottler, Ralf, 75242 Neuhausen (DE); Hoen, Günther, 71254 Ditzingen (DE)
(74) Vertreter: Knecht, Ulrich Karl, Dipl.-Ing.

(57) **Zusammenfassung**

Um eine Transkodier-Vorrichtung (TRCU) für den Einsatz in einem Telekommunkationsnetz so zu verbessern, daß die Übertragung digitaler Sprachsignale mit verschiedenen Transkodierraten erfolgen kann, wird vorgeschlagen, innerhalb der Transkodier-Vorrichtung mindestens zwei Rechenwerken (FR, HR, EFR) mit verschiedenen Transkodierraten auf jeweils einer Einschubleiterplatte anzuordnen und die Transkodier-Vorrichtung mit einem Bauträger mit Rückwandverdrahtung zu versehen, der diese Einschubleiterplatten aufnimmt. Durch diese Maßnahmen wird jeweils ein Rechenwerk mit z.B. acht digitalen Signalprozessoren für einen der verschiedenen Transkodierraten bereitgestellt. Für jede Transkodierrate kann das Rechenwerk optimiert werden. Außerdem können einzelne Einschubleiterplatten ausgetauscht oder nachgerüstet werden. Die Transkodier-Vorrichtung (TRCU) ist modular gestaltet und kann etwa nach Art einer sogenannten Backplane-Konstruktion sehr flexibel auf- oder umgebaut werden. Die vorgeschlagene Transkodier-Vorrichtung wird z. B. in einem drahtlosen Telekommunikationsnetz, das heißt in einem Mobilfunknetz, eingesetzt.

## Beschreibung

Die Erfindung betrifft eine Transkodier-Vorrichtung mit mindestens zwei Rechenwerken, die digitale Sprachsignale zur Übertragung in einem Telekommunikationsnetz transkodieren.

Eine solche Transkodier-Vorrichtung ist aus EP 600 197 A2 bekannt. Dort ist eine Transkodier-Vorrichtung für ein drahtloses Telekommunikationsnetz, nämlich für ein Mobilfunknetz, beschrieben. Die dortige Transkodier-Vorrichtung enthält mehrere Rechenwerke in Form von digitalen Signalprozessoren, die auf mehreren Nachrichtenkanälen digital übertragene Sprachsignale transkodieren. Dazu werden Transkodierverfahren verwendet, die im GSM-Standard (GSM: Global System for Mobile Communications) vorgeschrieben sind. Nach der dortigen Beschreibung, Spalte2, Zeilen 4 bis 52 sind fünf Prozessoren für die Transkodierung auf acht Nachrichtenkanälen zuständig. Wie dort ebenfalls beschrieben, verfügt die Transkodier-Vorrichtung über einen sogenannten Eingangs-/Ausgangs-Prozessor, der den Zugriff auf die einzelnen Signalprozessoren steuert. Diese Maßnahmen verringern die Anzahl der benötigten Signalprozessoren. Alle verwendeten Prozessoren, d.h. alle Rechenwerke, sind auf einer Leiterplatte angeordnet. Eine Übertragung von digitalen Sprachsignale mit verschiedenen Transkodierraten ist dort nicht beschrieben.

In dem Mobilfunknetz nach dem GSM-Standard sind Übertragungsmodi mit verschiedenen Transkodierraten vorgesehen. In den Empfehlungen GSM08.60, GSM06.10-12 und GSM06.31-32 wird der sogenannte Full Rate Modus definiert, bei dem Sprachsignale zwischen Übertragungen mit 16 kbit/sec und 64 kbit/sec transkodiert werden. In GSM08.61, GSM06.20-22 und GSM06.41-42 wird der sogenannte Half Rate Modus definiert, bei dem Sprachsignale zwischen Übertragungen mit 8 bit/sec und 64 kbit/sec transkodiert werden. Schließlich wird in GSM08.60, GSM06.60-62 und GSM06.81-82 der sogenannte Enhanced Full Rate Modus definiert, der hinsichtlich der Signalqualität einer Verbesserung des Full Rate Modus entspricht. Der Aufbau einer Transkodier-Vorrichtung ist nicht Gegenstand des GSM-Standards.

Aufgabe der Erfindung ist es, eine Transkodier-Vorrichtung der eingangs genannten Art für den Einsatz in einem Telekommunikationsnetz so zu verbessern, daß die Übertragung digitaler Sprachsignale mit verschiedenen Transkodierraten erfolgen kann.

Die Aufgabe wird gelöst durch eine Transkodier-Vorrichtung mit den Merkmalen nach dem Patentanspruch 1.

Außerdem werden nach einem der nebengeordneten Patentansprüche eine Mobilfunkvermittlungsstelle, eine Funkfeststationssteuerung oder ein Telekommunikationsnetz vorgeschlagen, die mit dieser Transkodier-Vorrichtung ausgestattet sind.

Die erfindungsgemäße Transkodier-Vorrichtung enthält mindestens zwei Rechenwerke, die mit verschiedenen Transkodierraten die Sprachsignale transkodieren und die jeweils auf einer Einschubleiterplatte angeordnet sind, sowie einen Baugruppenträger mit Rückwandverdrahtung, der die Einschubleiterplatten aufnimmt. Durch diese Maßnahmen wird jeweils ein Rechenwerk für eine der verschiedenen Transkodierraten bereitgestellt. Als Rechenwerke können Prozessoren, insbesondere digitale Signalprozessoren, oder logische Schaltkreise, insbesondere sogenannte ASIC's, verwendet werden. Für jede Transkodierrate kann daher das optimale Rechenwerk eingesetzt werden. Da die vorgeschlagene Konstruktion der Transkodier-Vorrichtung einen Baugruppenträger mit Rückwandverdrahtung umfaßt, können einzelne Einschubleiterplatten ausgetauscht oder nachgerüstet werden. Die Transkodier-Vorrichtung ist daher sehr modular gestaltet und kann etwa nach Art einer sogenannten Backplane-Konstruktion sehr flexibel auf- oder umgebaut werden. Es können z. B. Einschubleiterplatten mit Prozessoren für niedrige, mittlere oder hohe Transkodierraten schnell bereitgestellt oder ausgetauscht werden.

Vorteilhafte Ausgestaltungen der Erfindung sind den Unteransprüchen zu entnehmen.

Im folgenden wird die Erfindung anhand eines Ausführungsbeispieles und unter Zuhilfenahme der folgenden Figuren beschrieben:
- Fig. 1,: die schematisch ein Mobilfunknetz mit einer Transkodier-Vorrichtung zeigt, und
- Fig. 2,: die schematisch den Aufbau der Transkodier-Vorrichtung zeigt.

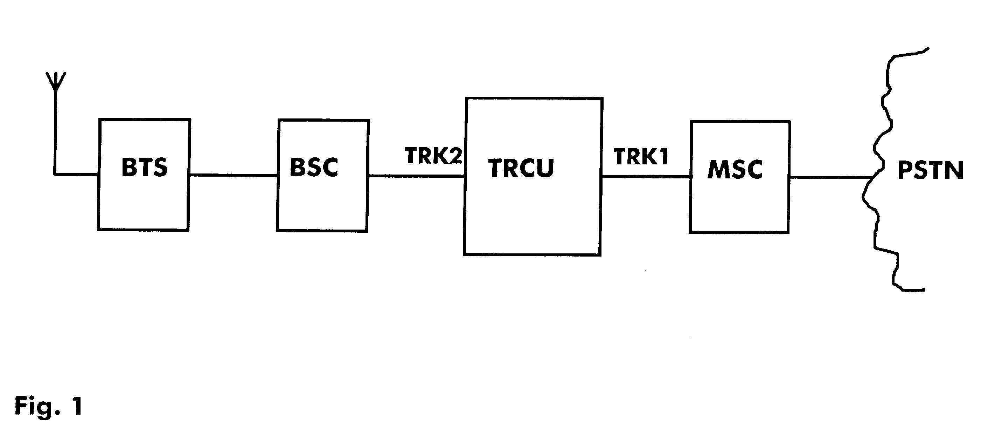

In Fig. 1 ist schematisch der Aufbau eines Mobilfunknetzes, das heißt der Aufbau eines drahtlosen Telekommunikationsnetzes, dargestellt. Das Mobilfunknetz enthält die nachfolgend genannten Komponenten, von denen exemplarisch jeweils nur eine in Fig. 1 dargestellt ist:

Eine Funkfeststation BTS, eine daran angeschlossene Funkfeststationssteuerung BSC, eine daran angeschlossene Transkodier-Vorrichtung TRCU und eine daran angeschlossene Mobilfunkvermittlungsstelle MSC, die mit einem öffentlichen Telekommunikationsnetz PSTN verbunden ist. Die Transkodier-Vorrichtung TRCU ist in diesem Beispiel zwischen die Funkfeststationssteuerung BSC und die Mobilfunkvermittlungsstelle MSC geschaltet, um auf der Verbindungsstrecke zwischen diesen beiden Komponenten die digitalen Sprachsignale von ersten Nachrichtenkanälen auf zweite, schmalbandigere Nachrichtenkanäle umzusetzen. Dazu ist die Transkodier-Vorrichtung mit einer ersten Übertragungsleitung TRK1 verbunden, die die ersten Nachrichtenkanäle bündelt und die zur Mobilfunkvermittlungsstelle MSC führt. Diese erste Übertragungsleitung ist eine sogenannte PCM 30-Leitung mit 30 Sprachkanälen à 64 kbit/sec. Außerdem ist die Transkodier-Vorrichtung mit einer zweiten Übertragungsleitung TRK2 verbunden, die die zweiten Nachrichtenkanäle, hier 30 Sprachkanäle à 16 kbit/sec, bündelt.

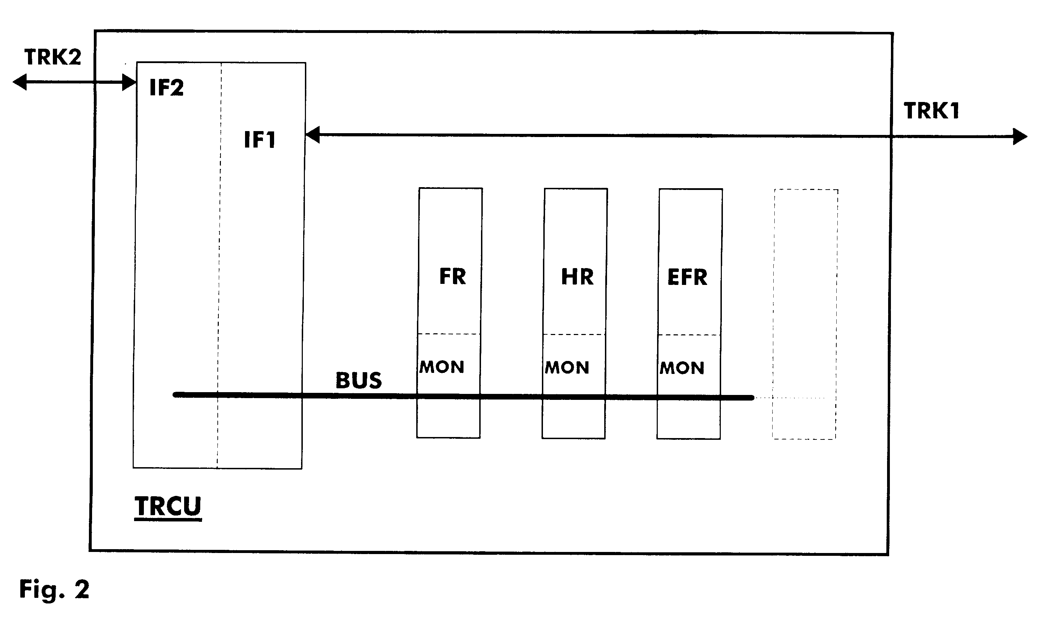

In Fig. 2 ist der Aufbau der Transkodier-Vorrichtung TRCU schematisch dargestellt. Die Transkodier-Vorrichtung enthält in diesem Beispiel drei Rechenwerke FR, HR und EFR, die jeweils auf einer Einschubleiterplatte angeordnet sind und die mit verschiedenen Transkodierraten die Sprachsignale transkodieren. In diesem Beispiel enthält jedes Rechenwerk 16 digitale Signalprozessoren. Die Prozessoren des Rechenwerkes HR transkodieren mit einer niedrigeren Transkodierrate nach dem oben genannten Half Rate Modus, die Prozessoren des Rechenwerkes FR transkodieren mit einer mittleren Transkodierrate nach dem oben genannten Full Rate Modus und die Prozessoren des Rechenwerkes EFR transkodieren mit einer hohen Transkodierrate nach dem oben genannten Enhanced Full Rate Modus. Die Transkodier-Vorrichtung TRCU hat eine Rückwandverdrahtung, die einen Datenbus BUS enthält, und hat damit verbundene Schnittstellenkreise IF1 und IF2 zum Anschluß der Transkodier-Vorrichtung an die in Figl. 1 dargestellte Funkfeststationssteuerung BSC und an die dort dargestellte Mobilfunkvermittlungsstelle MSC.

Der Schnittstellenschaltkreis IF1 ist mit der Mobilfunkvermittlungsstelle MSC über die erste Übertragungsleitung TRK1 verbunden, die in diesem Beispiel nach dem PCM 30-Standard 30 Sprachkanäle à 64 kbit/sec bündelt. Die Schnittstellenschaltung IF2 ist mit der Funkfeststationssteuerung BSC über die zweite Übertragungsleitung TRK2 verbunden, die schmalbandigere Nachrichtenkanäle bündelt, in diesem Beispiel 30 Sprachkanäle à 16 kbit/sec.

Auf jeder Einschubleiterplatte befindet sich eine nicht dargestellte Schaltung mit Überwachungsschaltkreisen MON, die die zweiten, schmalbandigeren Nachrichtenkanäle überwachen, um Kennungen für eine von einem Teilnehmer des Mobilfunknetzes gewünschte Übertragungsqualität zu erkennen und um die Wahl eines der Rechenwerke FR, HR oder EFR für die Transkodierung der Sprachsignale zu steuern.

Die Funktionsweise der Transkodier-Vorrichtung TRCU wird im weiteren näher beschrieben:

Es soll beispielsweise eine Duplexverbindung zwischen einem Mobilfunkteilnehmer und einem Teilnehmer des öffentlichen
Telekommunikationsnetzes PSTN hergestellt werden. Der Mobilfunkteilnehmer benutzt ein Mobilfunktelefon, das nach dem Full Rate-Modus Sprachsignale sendet und empfängt mit einer Übertragungsrate von 16kbit/sec., wovon 13kbit/sec. auf das Sprachsignal als solches und 3kbit/sec. auf die benötigte Signalisierung entfallen. Der Teilnehmer des öffentlichen Telefonnetzes benutzt ein ISDN-Telefon, das Sprachsignale mit einer Übertragungsrate von 64 kbit/sec sendet und empfängt. Die nicht dargestellten Schaltungen auf den Einschubleiterplatten, die den Zugriff auf den Datenbus BUS steuern, enthalten die Überwachungsschaltkreise MON, die die Sprachsignale auf der zweiten Übertragungsleitung TRK2 überwachen. Anhand des Bitmusters des vom Mobilfunkteilnehmer kommenden digitalen Sprachsignals stellt derjenige Überwachungsschaltkreis MON, der mit den Prozessoren FR verbunden ist, fest, daß das Mobilfunktelefon im Full Rate-Modus arbeitet. Danach steuert diejenige Schaltung, die diesen Überwachungsschaltkreis MON enthält, den Zugriff der Prozessoren FR auf den Datenbus BUS. Einer dieser Prozessoren FR setzt anschließend das Sprachsignal in ein PCM-Signal mit 64kbit/sec. um. Das Sprachsignal wird dann über den Datenbus BUS, über den Schnittstellenschaltkreis IF1 und über die erste Übertragungsleitung TRK1 an die Mobilfunkvermittlungsstelle MSC weitergeleitet. Von dort wird es über das öffentliche Telekommunikationsnetz PSTN an den anderen Teilnehmer übertragen. In Gegenrichtung wird das Sprachsignal, das dieser Teilnehmer sendet an die Transkodier-Vorrichtung TRCU übertragen, wo es von dem Prozessor FR von 64 kbit/sec auf 16 bit/sec umgesetzt wird, um anschließend über die zweite Übertragungsleitung TRK2 an den Mobilfunkteilnehmer weitergeleitet zu werden.

Die Prozessoren FR, HR, EFR sind so ausgelegt, daß sie auf mehreren Kanälen gleichzeitig die Sprachsignale transkodieren können. Auf jeder Einschubleiterplatte werden von den dort angeordneten 16 Prozessoren im Full Rate-Modus 64, im Half Rate-Modus 32 und im Enhanced Full Rate-Modus 32 Kanäle bearbeitet. In dem obigen Beispiel werden die Sprachsignale transkodiert, die auf einer Duplex-Verbindung zwischen einem Mobilfunkteilnehmer und einem Festnetz-Teilnehmer ausgetauscht werden.Die Transkodier-Vorrichtung TRCU transkodiert auch Sprachsignale, die zwischen zwei Mobilfunkteilnehmern übertragen werden. Beispielsweise wird ein von einem ersten Mobilfunkteilnehmer kommendes Sprachsignal im Half Rate-Format (8 kbit/sec) durch einen der Prozessoren HR in ein PCM-Signal mit 64 kbit/sec umgesetzt und anschließend von einem der Prozessoren FR in ein Full Rate-Format (16 kbit/sec) umgesetzt, um danach an einen zweiten Mobilfunkteilnehmer übertragen zu werden, der dieses Sprachsignal im Full Rate-Modus empfängt.

Bei dem oben beschriebenen Aufbau der Transkodier-Vorrichtug mit dem Datenbus BUS und den Überwachungsschaltkreisen MON kann zur Transkodierung von Sprachsignalen auf die Rechenwerke, d.h. auf jeden der Prozessoren FR, HR und EFR, wahlfrei zugegriffen werden. Demnach ist die Transkodier-Vorrichtung TRCU nach Art eines Prozessor-Pools aufgebaut. Die Konstruktion der Transkoder-Vorrichtung TRCU mittels der Rückwandverdrahtung und den Einschubleiterplatten ermöglicht einen schnellen und einfachen Austausch der Rechenwerke. Auch können Einsteckplätze für neue Einschubleiterplatten vorgesehen werden, so daß die Transkoder-Vorrichtung sehr einfach um weitere Rechenwerke, wie etwa digitale Signalprozessoren oder ASIC's, erweitert werden kann. Die Transkodier-Vorrichtung kann demnach sehr schnell und einfach an die Erfordernisse des Mobilfunknetzes angepaßt werden. In diesem Beispiel enthält die Transkodier-Vorrichtung Rechenwerke für den Half Rate-Modus, für den Full Rate-Modus und für den Enhanced Full Rate-Modus. Es sind selbstverständlich auch andere Konfiguration denkbar.

Die Transkodier-Vorrichtung wurde in diesem Beispiel zwischen die Funkfeststationssteuerung BSC und die Mobilfunkvermittlungsstelle MSC geschaltet. Es ist auch denkbar, diese an einer anderen Stelle in das Mobilfunknetz einzugliedern, wie etwa zwischen die Funkfeststationssteuerung und die Funkfeststation. Auch ist es denkbar, die Transkodier-Vorrichtung in die Mobilfunkvermittlungsstelle oder in die Funkfeststationssteuerung zu integrieren.

Das oben beschriebene Beispiel betrifft den Einsatz der Transkodier-Vorrichtung in einem Mobilfunknetz, das nach dem GSM-Standard ausgelegt ist. Es ist auch denkbar, die Transkodier-Vorrichtung in einem anderen drahtlosen Telekommunikationsnetz oder in einem drahtgebundenen Telekommunikationsnetz einzusetzen.

## Patentansprüche

1. Transkodier-Vorrichtung (TRCU) mit mindestens zwei Rechenwerken (FR, HR, EFR), die digitale Sprachsignale zur Übertragung in einem Telekommunikationsnetz transkodieren,
**dadurch gekennzeichnet, daß**
die Rechenwerke (FR, HR, EFR) mit verschiedenen Transkodierraten die Sprachsignale transkodieren und jeweils auf einer Einschubleiterplatte angeordnet sind, und daß die Transkodier-Vorrichtung (TRCU) einen Baugruppenträger mit Rückwandverdrahtung (BUS) enthält, der die Einschubleiterplatten aufnimmt.

2. Transkodier-Vorrichtung (TRCU) nach Anspruch 1,
**dadurch gekennzeichnet**, daß die Rechenwerke Prozessoren (FR, HR, EFR) enthalten und daß auf jeder Einschubleiterplatte nur solche Prozessoren (FR) angeordnet sind, die mit derselben Transkodierrate die Sprachsignale transkodieren.

3. Transkodier-Vorrichtung (TRCU) nach Anspruch 2,
**dadurch gekennzeichnet**, daß die Rückwandverdrahtung einen Datenbus (BUS) enthält und daß jede Einschubleiterplatte eine mit dem Datenbus verbundene Schaltung enthält, die einen wahlfreien Zugriff auf die Prozessoren (FR, HR, EFR) über den Datenbus steuern.

4. Transkodier-Vorrichtung (TRCU) nach Anspruch 3,
**dadurch gekennzeichnet**, daß die Rückwandverdrahtung neben dem einen Datenbus (BUS) mindestens einen weiteren Datenbus enthält, und daß jeder der Datenbusse mit allen Einschubleiterplatten verbunden ist.

5. Transkodier-Vorrichtung (TRCU) nach Anspruch 3,
**dadurch gekennzeichnet**, daß die Transkodier-Vorrichtung mit dem Datenbus (BUS) verbundene Schnittstellenschaltkreise (IF1, IF2) enthält, die die Transkodier-Vorrichtung (TRCU) mit ersten Übertragungsleitungen (TRK1) des Telekommunikationsnetzes verbinden, die erste Nachrichtenkanäle bündeln, und mit zweiten Übertragungsleitungen (TRK2) des Telekommunikationsnetzes verbinden, die zweite, schmalbandigere Nachrichtenkanäle bündeln.

6. Transkodier-Vorrichtung (TRCU) nach Anspruch 5,
dadurch gekennzeichnet, daß die Schaltungen Überwachungsschaltkreise (MON) enthalten, die die zweiten, schmalbandigeren Nachrichtenkanäle überwachen, um eine Kennung für eine von einem Teilnehmer des Telekommunikationsnetzes gewünschte Übertragungsqualität zu erkennen und um anhand der Kennung den Zugriff auf einen der Prozessoren (HR) für die Transkodierung der Sprachsignale zu steuern.

7. Transkodier-Vorrichtung (TRCU) nach Anspruch 6,
dadurch gekennzeichnet, daß die Überwachungsschaltkreise (MON) zur Erkennung der Kennung die Bitmuster der Sprachsignale auswerten.

8. Mobilfunkvermittlungsstelle (MSC) mit einer Transkodier-Vorrichtung (TRCU), die mindestens zwei Rechenwerke (FR, HR, EFR) enthält, die digitale Sprachsignale zur Übertragung in einem Mobilfunknetz transkodieren,
**dadurch gekennzeichnet, daß**
die Rechenwerke (FR, HR, EFR) mit verschiedenen Transkodierraten die Sprachsignale transkodieren und jeweils auf einer Einschubleiterplatte angeordnet sind, und daß die Transkodier-Vorrichtung (TRCU) einen Baugruppenträger mit Rückwandverdrahtung (BUS) enthält, der die Einschubleiterplatten aufnimmt.

9. Funkfeststationssteuerung (BSC) mit einer Transkodier-Vorrichtung (TRCU), die mindestens zwei Rechenwerke (FR, HR, EFR) enthält, die digitale Sprachsignale zur Übertragung in einem Mobilfunknetz transkodieren,
**dadurch gekennzeichnet, daß**
die Rechenwerke (FR, HR, EFR) mit verschiedenen Transkodierraten die Sprachsignale transkodieren und jeweils auf einer Einschubleiterplatte angeordnet sind, und daß die Transkodier-Vorrichtung (TRCU) einen Baugruppenträger mit Rückwandverdrahtung (BUS) enthält, der die Einschubleiterplatten aufnimmt.

10. Telekommunikationsnetz mit einer Transkodier-Vorrichtung (TRCU), die mindestens zwei Rechenwerke (FR, HR, EFR) enthält, die digitale Sprachsignale zur Übertragung in dem Telekommunikationsnetz transkodieren,
**dadurch gekennzeichnet, daß**
die Rechenwerke (FR, HR, EFR) mit verschiedenen Transkodierraten die Sprachsignale transkodieren und jeweils auf einer Einschubleiterplatte angeordnet sind, und daß die Transkodier-Vorrichtung (TRCU) einen Baugruppenträger mit Rückwandverdrahtung (BUS) enthält, der die Einschubleiterplatten aufnimmt.
